# FASCICULE DE BREVET EUROPEEN

(11) **EP 0 549 454 B1**
(45) Date de publication et mention de la délivrance du brevet: **22.05.1996**
(21) Numéro de dépôt: 92403509.0
(22) Date de dépôt: 21.12.1992
(51) Int. Cl.: B64C 27/35

(54) **Tête de rotor articulé pour giravion**
Gelenkrotorkopf eines Drehflügelflugzeuges
Articulated rotor head for a rotorcraft

(30) Priorité: 27.12.1991 FR 9116220
(43) Date de publication de la demande: 30.06.1993
(73) Titulaire: AEROSPATIALE Société Nationale Industrielle, F-75781 Paris Cédex 16 (FR)
(72) Inventeur: Mouille, René Louis, F-13090 Aix-en-Provence (FR)
(74) Mandataire: Phélip, Bruno

(56) Documents cités:
- EP-A- 0 331 791
- FR-A- 2 427 251
- GB-A- 2 040 850

## Description

La présente invention se rapporte à une tête de rotor articulé pour giravion comportant un corps de moyeu central rigide, qui est solidarisé perpendiculairement à un arbre d'entraînement. Chacune des pales de cette tête de rotor est fixée radialement au corps de moyeu par l'intermédiaire d'organes de liaison et d'articulation. La tête de rotor articulé en pas, battement et traînée, selon l'invention, s'applique plus particulièrement à un hélicoptère.

On connaît de nombreux dispositifs de têtes de rotors articulés pour giravion, et notamment ceux développés par la demanderesse, qui ont fait l'objet des brevets français 2 427 251 (qui montre une tête de rotor selon le préambule de la revendication 1), 2 456 034, 2 516 891, 2 584 995 et 2 584 996. Ce type de moyeu a atteint une grande simplicité, surtout dans sa forme de mât-moyeu intégré, mais il présente cependant un certain nombre de points sensibles. En effet, une butée sphérique en élastomère lamifiée assure par elle-même, sous les efforts centrifuges en provenance de la pale qui la sollicitent en compression, les trois fonctions d'articulation de la pale dues au battement, à !a traînée et à la commande de pas. Ainsi, la butée sphérique en élastomère lamifiée est un des éléments essentiels de la définition du moyeu, et celui qui gouverne son dimensionnement. Un autre point sensible de ce type de tête de rotor est constitué par la présence pour chaque pale d'une contrefiche de rappel élastique en traînée avec amortissement incorporé, qui contrôle les mouvements angulaires de la pale dans son plan et assure la stabilité du rotor à l'encontre des phénomènes de résonance-sol et de résonance-air. Cette contrefiche de rappel élastique à amortissement incorporé suit les mouvements du manchon d'attache de la pale correspondante en battement, en traînée et en commande de pas. Cela conduit à des couplages pastraînée, en particulier qui sont générateurs d'efforts accrus sur les commandes. D'autre part, cela amène des mouvements angulaires importants sur les rotules d'attache des extrémités de la contrefiche de rappel élastique à amortissement incorporé, qui sont préjudiciables à une longue durée en service de ces organes, qui encaissent par ailleurs de fortes charges radiales tant statiques que dynamiques.

Dans les conditions de fonctionnement des hélicoptères actuels, ces différents problèmes sont assez aisément maîtrisés par ces types de rotor, et la tenue obtenue en service est convenable. Cependant, l'évolution des appareils à voilure tournante dans les prochaines années conduira certainement à des conditions de vol plus étendues, notamment en matière de vitesse, provoquant des sollicitations plus contraignantes sur le moyeu. En particulier, les variations de pas collectif et de pas cyclique vont augmenter de façon significative, et les problèmes de tenue en endurance des butées lamifiées sphériques et des rotules de contrefiche de rappel élastique et d'amortissement des pales en traînée vont se poser de façon plus aiguë.

Afin de répondre à ces exigences, il a été proposé des solutions de rotors articulés qui combinent plusieurs types de butées pour chaque pale, comme par exemple dans le brevet européen 0 331 791, et dans le brevet américain 4 203 708.

Le brevet européen 0 331 791 concerne une structure dans laquelle le corps de moyeu est raccordé au sommet du mât par l'intermédiaire d'une rotule lamifiée sphérique centrale et unique. Le corps de moyeu porte, pour chacune des pales, une fusée solidarisée avec le corps de moyeu, sur laquelle est monté un manchon de liaison avec la pale. Ce manchon est monté sur la fusée par l'intermédiaire de deux roulements, et d'une butée lamifiée en forme de couronne plane interposée entre la fusée et le manchon. Dans ce brevet, la rotule lamifiée sphérique centrale permet des oscillations angulaires limitées autour du centre de cette rotule, et réduit ainsi dans ce type de rotor dit "rigide" le moment d'encastrement du moyeu sur le mât. Ce type de rotule unique permet donc seulement des sollicitations d'assiette de l'ensemble du rotor, mais elle a l'inconvénient de ne permettre en aucun cas des mouvements angulaires individuels des pales en battement, traînée et en pas.

De plus, cette rotule lamifiée centrale n'est pas concernée par les efforts centrifuges en provenance des pales, qui s'équilibrent d'une pale sur les autres par l'armature externe de cette rotule centrale. Dans ce type de montage, la commande de pas est montée sur le manchon qui est extérieur à la fusée. Dans cette disposition, le manchon extérieur est sollicité par la commande de pas, mais il n'en reçoit pas les mouvements de battement et de traînée, qui sont assurés par la flexibilité du col de pale. On retrouve ainsi les inconvénients cités précédemment relatifs à la commande de pas par l'intermédiaire du manchon. En fait, l'objet majeur de l'invention décrite dans ce document semble être une architecture de moyeu, dans laquelle la combinaison des deux blocs lamifiés permet de faire joint pour éviter les pertes d'huile.

Le brevet américain 4 203 708 se rapporte à une tête de rotor articulé, dans laquelle chaque pale est reliée au corps de moyeu par l'intermédiaire de deux butées lamifiées : une butée sphérique et une butée plate. Dans cette architecture, un manchon de liaison est disposé entre la pale et l'ensemble des butées, et la commande de pas est montée directement sur ce manchon de liaison. Ainsi, dans ce type de montage, les deux butées sont accolées et fonctionnent en série sur une même fusée disposée à l'extrémité interne du manchon de liaison. De ce fait, cette structure ne sépare pas les fonctions de battement et de commande de pas dans deux pièces différentes, ce qui amène des couplages importants de traînée-pas sur l'amortisseur, dont l'extrémité intérieure est attachée sur le corps de moyeu et dont l'extrémité extérieure est liée au pied de pale. En effet, les changements de pas font tourner le point d'accrochage de l'amortisseur du côté de la pale, sur un arc de cercle, et amènent en conséquence des variations de distance entre les attaches de l'amortisseur du côté de la pale et du côté moyeu. Il s'ensuit alors des mouvements dynamiques parasites de l'amortisseur, ainsi que des mouvements importants des rotules disposées aux attaches de cet amortisseur. D'autre part, dans cette organisation de moyeu, les butées basses des pales en battement sont difficiles à réaliser pour permettre, rotor à l'arrêt et pales reposant sur leurs butées, la manoeuvre du pas des pales sur toute la plage autorisée, comme imposé par les règles de sécurité de vol, pour éprouver le libre débattement des commandes de vol avant la mise en rotation des rotors. Dans ce cas, en effet, chaque fusée porte-pale tourne autour de son axe longitudinal et le dispositif de butées basses doit permettre cette libre rotation, alors que le point de contact sur celles-ci est très fortement chargé par la reprise du moment provenant du poids de la pale, dont le centre de gravité est éloigné de plusieurs mètres. Enfin, les deux butées lamifiées dans cette structure sont disposées à l'intérieur du corps de moyeu, et ne sont donc pas visibles sans démontage pour une surveillance facile de leur état.

Le but de la présente invention est de proposer une tête de rotor articulé, dont chaque pale est reliée au corps de moyeu par une butée lamifiée sphérique, qui permette d'améliorer la tenue en service de ladite butée lamifiée sphérique, en réduisant les débattements angulaires qui la sollicitent aux seuls débattements de battement et de traînée des pales par le report des débattements nécessaires à la commande de pas sur un autre élément de l'architecture du moyeu. Un autre but de l'invention est de proposer une architecture qui permette également de réduire, de façon significative, les sollicitations angulaires des rotules d'attache, de l'élément amortisseur et de rappel élastique de chaque pale en traînée, et d'accroître ainsi leur endurance en service.

Ce premier but est atteint par une tête de rotor articulé pour giravion selon la revendication 1.

Dans l'architecture de l'invention, le palier que constitue la butée axiale est, soit le palier qui est situé le plus près du centre du corps de moyeu, soit le palier qui est situé le plus loin du centre du corps de moyeu. De plus, le levier de pas est, soit installé à l'extrémité interne de la fusée d'attache et d'articulation de pas de la pale, soit installé à l'extrémité externe de la fusée d'attache et d'articulation de pas de la pale.

Dans l'invention, il est également prévu un dispositif de butée basse de battement pour chaque pale, qui est disposé sous le manchon du coté du corps de moyeu, et qui permet l'appui du manchon-support de pale à l'arrêt, ou lorsque le rotor tourne à faible vitesse.

Avantageusement, selon l'invention, les moyens d'attache de chaque élément allongé de rappel élastique et d'amortissement en traînée de chaque pale sont constitués par une chape, dans laquelle vient se monter l'extrémité articulée correspondante dudit élément allongé. Les moyens d'attache de chaque élément allongé ou contrefiche de rappel élastique et d'amortissement avec le corps de moyeu, ou encore avec le manchon d'attache d'une pale voisine, sont constitués par une chape, dans laquelle vient se monter l'extrémité articulée correspondante de ladite contrefiche. De plus, les axes d'articulation des extrémités de chaque contrefiche de rappel élastique et d'amortissement sont préférentiellement perpendiculaires l'un par rapport à l'autre.

Afin de répondre au mieux aux objectifs de l'invention, le palier de la fusée, qui est constitué en butée axiale, est une butée lamifiée de type conique, qui constitue simultanément le palier intérieur d'articulation et l'organe de retenue, à l'encontre de la force centrifuge de la fusée dans le manchon.

Préférentiellement, chaque butée lamifiée sphérique est montée dans la tête de rotor articulé, selon l'invention, de manière que l'extrémité du manchon creux correspondant, située du côté du centre du corps de moyeu, soit solidarisée avec l'armature interne de la butée lamifiée sphérique. Cet assemblage est réalisé au moyen d'au moins deux boulons, qui pénètrent chacun dans un alésage aménagé dans chacune des extrémités du manchon et se faisant face l'un par rapport à l'autre, et chacun dans un alésage correspondant aménagé dans l'armature interne, de manière que ces alésages soient alignés suivant des axes sensiblement parallèles à l'axe du rotor. Afin d'améliorer cet assemblage, chacune des deux extrémités du manchon creux, située du côté du centre du corps de moyeu, est munie d'un décrochement, sensiblement perpendiculaire à l'axe du manchon, qui coopère avec un décrochement d'une forme conjuguée aménagé sur chacun des deux côtés de l'armature interne lui faisant face, de manière à soutenir les efforts s'exerçant dans le sens axial, et à soulager d'autant les boulons de liaison.

Selon l'invention, l'armature externe de chacune des butées lamifiées sphériques possède un logement ayant une forme conjuguée avec la bordure rigide externe de l'ouverture correspondante du corps de moyeu. L'armature externe de chaque butée lamifiée sphérique est solidarisée avec la bordure rigide externe de l'ouverture correspondante du corps de moyeu, au moyen d'au moins un boulon qui pénètre dans un alésage aménagé dans chacun des côtés du logement de l'armature externe et se faisant face l'un par rapport à l'autre, et dans un alésage correspondant aménagé entre la bordure rigide externe de l'ouverture et le pourtour du corps de moyeu, de manière que ces alésages soient alignés suivant des axes sensiblement parallèles à l'axe du rotor.

La fusée d'attache et d'articulation de pas, conçue selon l'invention, comporte :
- un corps creux de forme sensiblement tronconique circulaire dont l'extrémité interne, côté centre du corps de moyeu, qui correspond à la petite base, porte une coupelle de support de la butée lamifiée conique, et dont l'extrémité externe, qui correspond à la grande base, est constituée par une partie cylindrique circulaire qui est montée dans une portée cylindrique circulaire du manchon avec un jeu suffisant pour permettre la libre rotation de la fusée dans le manchon ; l'extrémité externe du corps creux étant constituée par la partie cylindrique circulaire qui se prolonge par :
- une embase disposée à l'extérieur du manchon, cette embase étant la partie externe de la fusée qui est munie de moyens de liaison rigide au pied de pale constitués par une double chape.

Pour cela, l'embase possède, à sa partie inférieure et à sa partie supérieure, une oreille ; les deux oreilles se faisant face, de manière à constituer la double chape, la liaison rigide avec le pied de pale étant assurée par les deux axes montés l'un et l'autre dans un alésage aménagé dans chacune des oreilles, et s'engageant dans un alésage aménagé dans le pied de pale, ces trois alésages étant disposés de manière que l'axe correspondant soit sensiblement parallèle à l'axe du rotor.

Plus précisément, selon l'invention, l'extrémité interne de la fusée d'attache et d'articulation de pas, qui est constituée par l'extrémité interne du corps creux, est réalisée sous la forme d'une tige cylindrique circulaire, qui comporte à sa périphérie des cannelures coopérant avec des cannelures aménagées dans un trou central appartenant à la coupelle ; la tige, le trou central et les deux séries de cannelures ayant les dimensions voulues pour que la coupelle soit solidaire en rotation de la tige, ladite coupelle étant maintenue dans le sens axial sur la tige par des moyens de blocage. Ces moyens de blocage de la coupelle sur la tige sont constitués par un écrou qui vient se visser sur une extrémité filetée de la tige, et qui vient appliquer la coupelle sur un épaulement réalisé à l'extérieur des cannelures. Le levier de pas est monté sur la coupelle de support de la butée lamifiée conique, avec laquelle il est solidarisé, de manière à former une seule et même pièce monobloc.

Dans ce mode de réalisation de l'invention, la butée lamifiée conique a son armature interne qui est constituée par la coupelle-support, et son armature externe qui est montée et solidarisée à l'intérieur du manchon dans la partie externe de ce dernier située du côté de l'axe du rotor, le centre du cône de ladite butée étant situé du côté du centre du rotor.

Le manchon creux,réalisé selon l'invention, comporte :
- une partie externe constituée par un tube, dont l'extrémité externe est munie, à l'intérieur, de la portée cylindrique circulaire de la fusée d'attache et d'articulation de pas,
- une partie interne de forme sensiblement tubulaire, avec les deux extrémités se faisant face l'une par rapport à l'autre et solidarisées avec l'armature interne de la butée lamifiée sphérique,
- la partie interne ayant une section transversale plus grande que la partie externe, de manière à pouvoir loger la butée lamifiée sphérique,
- l'armature externe de la butée lamifiée conique étant montée dans la zone de jonction de la partie externe avec la partie interne du manchon.

La partie externe du manchon est reliée à la partie interne du manchon par un décrochement ayant :
- une partie transversale sur laquelle s'applique l'armature externe de la butée lamifiée conique, et
- une partie circulaire interne dans laquelle 'rient se centrer l'armature externe de la butée lamifiée conique, de manière que l'axe de la fusée d'attache et d'articulation de pas ait le même axe que celui du manchon. La partie interne du manchon comporte deux ouvertures latérales se faisant face, de façon à permettre au levier de pas de traverser le manchon et de se débattre normalement par rapport à lui, lors de la commande de variation de pas.

Dans cette structure, le manchon creux comporte, sur un des côtés latéraux, dans une zone voisine de son extrémité externe, deux oreilles disposées face à face, de manière que ces deux oreilles constituent la chape destinée à recevoir l'extrémité articulée de la contrefiche de rappel élastique et d'amortissement de chaque pale en traînée. Les deux oreilles et le manchon sont un seul ensemble monobloc, et l'axe de l'extrémité articulée de ladite contrefiche est sensiblement perpendiculaire au plan du rotor.

La tête de rotor articulé, selon l'invention, est munie d'un dispositif de butée basse de chaque pale en battement, qui comporte un patin monté sous chacun des manchons creux. Chacun de ces patins vient en appui pour un angle de battement négatif donné sur la périphérie d'un anneau réciproque rigide maintenu en place parallèlement au plan du rotor, au moyen d'étriers fixés au corps de moyeu. Les étriers sont disposés de manière à laisser à l'anneau réciproque une possibilité de débattement limité dans son propre plan. Le patin est fixé sous le manchon correspondant au moyen des boulons de fixation de l'armature interne de la butée lamifiée sphérique.

La tête de rotor articulé, selon l'invention, a le corps de moyeu central qui comporte un plateau, perpendiculaire à l'axe du rotor. Le plateau est raccordé à la partie supérieure de l'arbre d'entraînement par une partie centrale tubulaire avec laquelle il forme une seule pièce, et il a un pourtour sensiblement circulaire et possédant les ouvertures dans lesquelles viennent se loger les butées sphériques lamifiées des pales. Chaque ouverture a un bord extérieur situé dans un plan parallèle à l'axe du rotor, et elle s'étend dans la direction radiale du moyeu depuis la partie centrale du moyeu jusqu'à une courte distance du pourtour. Le plateau comporte à sa périphérie, dans chacune des zones comprises entre deux butées sphériques lamifiées voisines, deux oreilles disposées face à face, de manière que ces deux oreilles constituent la chape destinée à recevoir l'extrémité articulée de la contrefiche de rappel élastique et d'amortissement en traînée de la pale correspondante, dont l'axe de l'extrémité articulée de ladite contrefiche est sensiblement parallèle au plan du rotor.

La tête de rotor articulé pour giravion, selon l'invention, présente ainsi la caractéristique essentielle d'avoir une fusée d'attache de pale qui soit l'intermédiaire entre le manchon de moyeu et la pale. Cette fusée d'attache de pale suit les mouvements de battement et de traînée du manchon, et elle est liée à ce manchon par l'intermédiaire d'une butée conique axiale lamifiée en élastomère, qui autorise par torsion les variations d'incidence sur la fusée en les rendant indépendantes du manchon.

Le levier de pas est solidarisé avec la fusée, soit du côté de l'attache de la pale, soit de préférence du côté de la butée conique de pas. Cette adjonction d'une articulation de pas offre l'avantage de limiter l'accroissement de masse, qui résulterait de la nécessité d'améliorer l'endurance de la butée lamifiée sphérique, et de renforcer les attaches de la contrefiche élastique (à supposer que l'encombrement possible soit suffisant), du fait de l'évolution des appareils à voilure tournante dans les prochaines années qui conduira certainement à des conditions de vol plus étendues, notamment en matière de vitesse.

Pour répondre à ces nouvelles exigences, la tête de rotor articulé pour giravion, selon l'invention, présente un certain nombre d'avantages déterminants. Tout d'abord, il en résulte une réduction sensible des fonctions à assumer par la butée lamifiée sphérique, qui n'est plus intéressée que par une partie seulement des variations d'incidence, et ceci en fonction des élasticités relatives en torsion de la butée sphérique elle-même et de la butée conique. De plus,le manchon n'est plus concerné que par des mouvements de variations de pas limités, ce qui facilite son installation sur le moyeu, et ce qui permet de réduire son encombrement du côté de la butée sphérique. Il en résulte aussi un couplage traînée-pas très réduit au niveau de la contrefiche élastique à amortissement incorporé. Il en résulte également des mouvements nettement plus faibles qui sont supportés par les rotules de fixation de cette contrefiche, ce qui est bénéfique pour leur endurance en service. Un autre avantage de l'invention réside dans le fait que les mouvements de variations de pas limités du manchon améliorent également les conditions de manoeuvre du rotor à l'arrêt, lorsque les manchons reposent sur le dispositif de butée basse par anneau réciproque. Les efforts d'appui sur cet anneau sont en effet importants, et l'effort de frottement à fournir, pour manoeuvrer le manchon dans ces conditions, est élevé. Dans la nouvelle proposition, la fusée peut être manoeuvrée en incidence sur toute la course de la commande sans entraîner le manchon, et par conséquent, sans problème de friction au niveau de la butée basse. Enfin, la butée sphérique et la butée conique sont agencées dans la structure de l'invention, de manière à être disposées à l'intérieur de la partie interne du manchon, qui possède deux ouvertures latérales. Ainsi, la butée sphérique et la butée conique sont visibles sans démontage, ce qui permet une surveillance facile de leur état, et ce qui est particulièrement important pour une inspection aisée suivant un programme de maintenance dit "Selon état".

D'autres avantages ressortiront de l'invention qui sera mieux comprise à l'aide de la description, donnée ci-dessous, d'exemples particuliers de réalisation décrits à titre non limitatif, en référence aux dessins annexés sur lesquels :
- la Figure 1 est une vue en coupe axiale de l'ensemble du dispositif, selon l'invention, pour l'ensemble d'une pale du rotor articulé, dans un plan de coupe comprenant l'axe de cette pale et l'axe de l'arbre d'entraînement ;
- la Figure 2 est une vue de dessus de la Figure 1, dans laquelle la commande de pas est en coupe partielle ;
- la Figure 3 est une vue à grande échelle de la partie centrale de la Figure 1 ;
- la Figure 4 est une vue à grande échelle de la partie externe de la Figure 1.

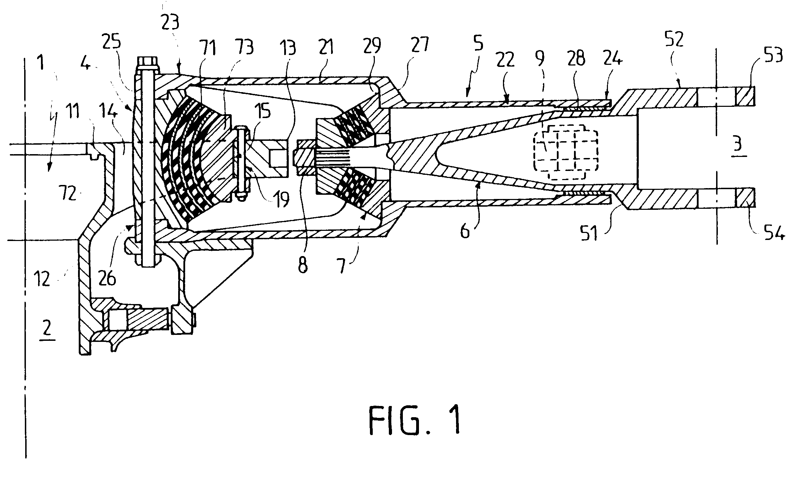

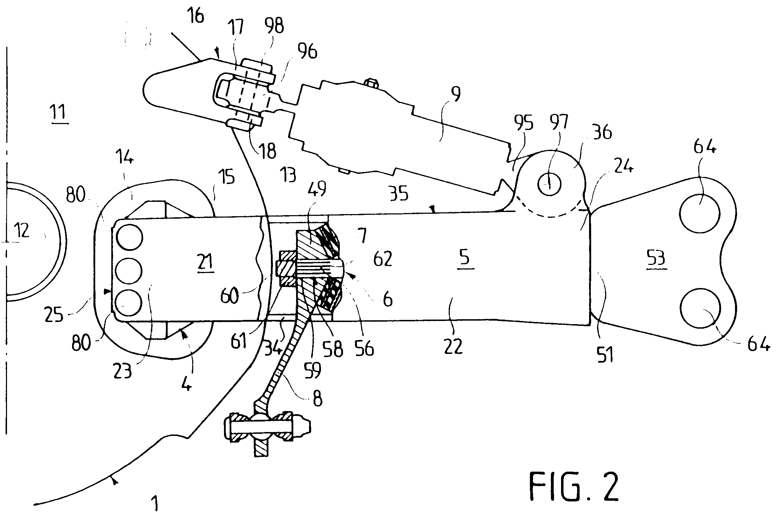

La tête de rotor articulé pour giravion, selon l'invention, est représentée sur les Figures 1 et 2, et elle comporte un corps de moyeu central 1 rigide, qui est solidarisé perpendiculairement à un arbre d'entraînement 2. Chacune des pales 3 de cette tête de rotor est fixée radialement au corps de moyeu 1 par l'intermédiaire d'organes de liaison et d'articulation.

Les organes de liaison et d'articulation comportent pour chacune des pales 3 :
- une butée lamifiée sphérique 4,
- un manchon 5 creux, solidarisé avec la butée lamifiée sphérique 4,
- une fusée 6 d'attache et d'articulation de pas de la pale 3, solidarisée avec cette pale 3,
- un levier de pas 8 qui est solidarisé avec la fusée 6.

La butée lamifiée sphérique 4 est constituée d'une armature rigide interne 72 et d'une armature rigide externe 73, entre lesquelles sont disposées des couches alternées sphériques et concentriques de matériau élastique et de matériau rigide 71. Cette butée lamifiée sphérique 4 est logée dans une ouverture 14, qui est pratiquée dans la partie rigide du corps de moyeu 1 central et elle vient s'appuyer par son armature externe 73 sur la bordure rigidifiée 15 de cette ouverture 14.

Le manchon 5 creux a son extrémité située du côté du centre du corps de moyeu, qui entoure la butée lamifiée sphérique 4 avec laquelle il est solidarisé par l'intermédiaire de l'armature rigide interne 72 de cette butée lamifiée sphérique 4. Le manchon 5 est de plus muni, à son extrémité située du côté opposé au centre du corps de moyeu 1, de moyens d'attache d'une contrefiche 9 de rappel élastique et d'amortissement de la pale 3 en traînée. Ces moyens d'attache sont disposés sur l'une des faces latérales 35 du manchon 5, comme on peut le voir sur la Figure 2. De plus, chaque contrefiche 9 de rappel élastique et d'amortissement de la pale 3 en traînée est attachée, à son autre extrémité, à la partie externe du corps de moyeu 1 rigide. Dans une autre variante de l'invention, non représentée sur les Figures, chaque contrefiche peut être attachée, à son autre extrémité, à la partie externe du manchon 5 d'attache d'une pale 3 voisine.

La fusée 6 d'attache et d'articulation de pas de la pale 3 est disposée à l'intérieur du manchon 5, et elle comporte une partie externe et une partie interne par rapport à l'axe de l'arbre d'entraînement 2. La partie externe est munie de moyens de liaison rigide au pied de pale 3, et la partie interne tourillone autour de l'axe de pas à l'intérieur de la partie externe du manchon 5 sur deux paliers. Selon l'invention, l'un au moins de ces paliers constitue une butée 7 qui transmet les efforts axiaux provenant de la force centrifuge sur la pale 3 au manchon 5 par l'intermédiaire de la fusée 6.

Dans le mode de réalisation, représenté sur les Figures, la butée 7 est le palier qui est situé le plus près du centre du corps de moyeu 1. Dans un autre mode de réalisation, non représenté sur les Figures, la butée 7 est le palier qui est situé le plus loin du centre du corps de moyeu 1.

Le levier de pas 8, qui est solidarisé avec la fusée 6, est installé à l'extrémité interne de cette fusée 6 d'attache et d'articulation de pas de la pale 3. Dans une variante de réalisation, non représentée sur les Figures, le levier de pas 8 est installé à l'extrémité externe de la fusée 6 d'attache et d'articulation de pas de la pale 3.

Chaque contrefiche 9 de rappel élastique et d'amortissement de la pale 3 en traînée est disposée entre le manchon 5 et le corps de moyeu 1, et elle comporte, à une de ces extrémités, des moyens d'attache avec le manchon 5, et à son autre extrémité, des moyens d'attache avec le corps de moyeu 1. Comme on peut le voir sur la Figure 2, les moyens d'attache de chaque contrefiche 9 de rappel élastique et d'amortissement avec le manchon 5 sont constitués par une chape 36, dans laquelle vient se monter l'extrémité articulée 95 correspondante de cette contrefiche 9, ce montage s'effectuant par l'intermédiaire d'un axe d'articulation 97. Les moyens d'attache de chaque contrefiche 9 de rappel élastique et d'amortissement avec le corps de moyeu 1 sont constitués par une chape 16, dans laquelle vient se monter l'extrémité 96 correspondante de cette contrefiche 9, le montage s'effectuant par l'intermédiaire d'un axe d'articulation 98. Selon l'invention, les axes d'articulation 97 et 98 des extrémités 95 et 96 de chaque contrefiche 9 de rappel élastique et d'amortissement sont perpendiculaires l'un par rapport à l'autre. On obtient ainsi une meilleure stabilité du montage de l'amortisseur pour les déplacements en compression et un meilleur travail de la butée lamifiée sphérique, dans la mesure où on évite qu'elle soit sollicitée en pas, en forçant tous les mouvements angulaires en pas à se faire dans l'articulation de pas destinée à cet effet.

Enfin, la tête de rotor articulé, selon l'invention, quand elle s'applique à une tête de rotor sustentateur, comporte un dispositif de butée basse de battement. Ce dispositif est disposé sous le manchon 5 du côté du corps de moyeu 1, et il permet essentiellement l'appui du manchon 5, c'est-à-dire de la pale 3 correspondante, lorsque le rotor est à l'arrêt ou lorsqu'il tourne à faible vitesse.

Le corps de moyeu central 1 de la tête de rotor articulé, selon l'invention, comporte un plateau 11 qui est perpendiculaire à l'axe du rotor, comme cela se voit sur les Figures 1 et 2. Le corps de moyeu central 1 est raccordé à la partie supérieure de l'arbre d'entraînement 2 par une partie centrale tubulaire 12. Le plateau 11, la partie centrale tubulaire 12 et la partie supérieure de l'arbre d'entraînement 2 forment une seule et même pièce. Le plateau 11 a un pourtour 13 qui est sensiblement circulaire, et qui posséde des ouvertures 14 disposées chacune dans l'axe d'une pale 3 correspondante. Dans chacune de ces ouvertures 14, vient se loger la butée lamifiée sphérique 4 correspondante, et pour cela, chaque ouverture 14 a un bord extérieur 15 qui est situé dans un plan parallèle à l'axe du rotor. D'autre part, chaque ouverture 14 s'étend dans la direction radiale du moyeu, depuis la partie centrale 12 de ce moyeu jusqu'à une courte distance du pourtour 13.

Dans chacune des zones comprises entre deux butées lamifiées sphériques 4 voisines, sont disposés les moyens d'attache de la contrefiche 9 de rappel élastique et d'amortissement en traînée de la pale correspondante. Ces moyens consistent en deux oreilles, référencées respectivement 17 et 18, qui sont disposées l'une en face de l'autre, sur le plateau 11 du corps de moyeu central 1. Ces deux oreilles 17 et 18 sont agencées, de manière à constituer la chape 16, qui est destinée à recevoir l'extrémité articulée 96 de la contrefiche 9 correspondante. Pour cela, l'extrémité 96 de cette contrefiche 9 se monte sur un axe d'articulation 98, qui est lui-même monté et supporté dans les deux oreilles 17 et 18. Dans cette configuration, l'axe 98 de l'extrémité articulée 96 de la contrefiche 9 est sensiblement parallèle au plan du rotor.

Les moyens d'attache de cette contrefiche 9 de rappel élastique et d'amortissement de la pale 3 en traînée avec le manchon creux 5 comportent deux oreilles 37 et 38 qui sont disposées l'une en face de l'autre à l'extérieur du manchon creux 5. Plus précisément, ces deux oreilles 37 et 38 sont disposées sur un des côtés latéraux 35 de ce manchon 5, et ils sont situés dans une zone voisine de son extrémité externe 24 par rapport à l'axe du rotor. Ces deux oreilles 37 et 38 constituent la chape 36, qui est destinée à recevoir l'extrémité articulée 95 de la contrefiche 9. Pour cela, ces deux oreilles 37 et 38 portent un axe d'articulation 97, sur lequel pivote l'extrémité articulée 95 de la contrefiche 9. De plus, l'axe 97 est sensiblement perpendiculaire au plan du rotor.

Le manchon creux 5 qui est monté sur le corps de moyeu 1 par l'intermédiaire de la butée lamifiée sphérique 4, et qui est raccordé à la pale 3 correspondante par la fusée d'attache et d'articulation de pas 6, comporte une partie externe 22 et une partie interne 21, appelées ainsi en se rapportant à leurs positions par rapport à l'axe de l'arbre d'entraînement 2. La partie externe 22 est constituée par un tube, et la partie interne 21 est de forme sensiblement tubulaire, et a une section transversale qui est plus grande que la section transversale de la partie externe 22, afin de pouvoir loger la butée lamifiée sphérique 4 correspondante.

La partie externe 22 a son extrémité externe 24 qui est munie, à l'intérieur du tube, d'une partie cylindrique circulaire 28. Cette partie circulaire 28 constitue le palier externe de la fusée d'attache et d'articulation de pas 6. La partie interne 21, de forme sensiblement tubulaire, a deux extrémités 25 et 26 qui se font face l'une par rapport à l'autre. Ces deux extrémités 25 et 26 sont solidarisées avec l'armature interne 72 de la butée lamifiée sphérique 4. La partie interne 21 est raccordée à la partie externe 22 par une zone de jonction 27, à l'intérieur de laquelle est aménagé un décrochement 29, sur lequel est montée la butée lamifiée conique 7 de la fusée d'attache et d'articulation de pas 6.

La partie interne 21 du manchon 5 comporte deux ouvertures latérales 34 se faisant face, de façon à permettre au levier de pas 8 de traverser le manchon 5 et de se débattre normalement par rapport à lui, lors de la commande de variation de pas.

Le manchon creux 5 est raccordé au corps de moyeu central 1 par la butée lamifiée sphérique 4, dont l'armature interne 72 est solidarisée avec le manchon 5, et dont l'armature externe 73 est solidarisée avec le plateau 11 du corps de moyeu central 1.

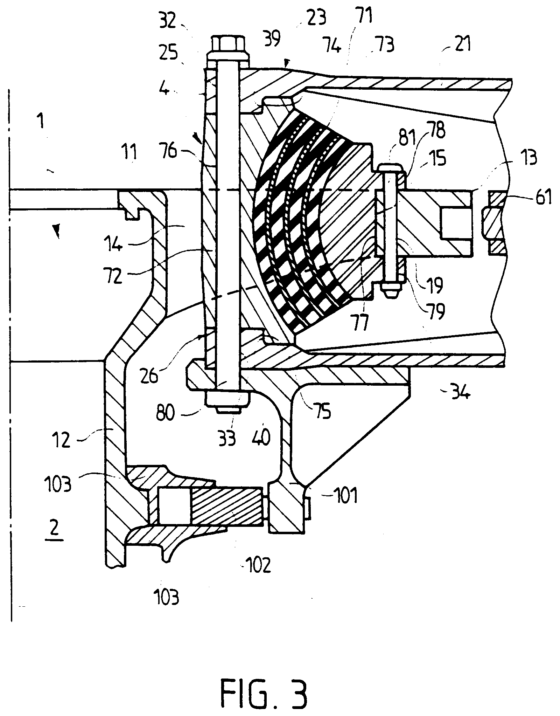

L'extrémité 23 du manchon creux 5, située du côté du centre du corps de moyeu 1, est solidarisée avec l'armature interne 72 de la butée lamifiée sphérique 4 correspondante par trois boulons 80. Pour cela, l'armature interne 72 de la butée lamifiée sphérique 4 est montée entre les extrémités 25 et 26 du manchon 5. Des alésages 32 et 33 sont aménagés respectivement dans chacune des extrémités 25 et 26 du manchon 5, de manière à se faire face l'un par rapport à l'autre et à constituer un axe suivant, lequel pourra s'engager le boulon de fixation 80. L'armature interne 72 possède également un alésage 76 correspondant qui est disposé, de manière que cet alésage 76 soit aligné avec les alésages correspondants 32 et 33 des extrémités 25 et 26, de manière à constituer un axe sensiblement parallèle à l'axe du rotor. On obtient ainsi trois groupes d'alésages dans lesquels sont montés les trois boulons 80 de fixation du manchon 5 sur la butée lamifiée sphérique 4 correspondante. De plus, en se référant à la Figure 3, chacune des deux extrémités 25 et 26 du manchon creux 5, située du côté du centre du corps de moyeu 1, est munie d'un décrochement 39 pour l'extrémité 25 et d'un décrochement 40 pour l'extrémité 26. Ces deux décrochements 39 et 40 sont sensiblement perpendiculaires à l'axe du manchon 5, et ils coopèrent avec un décrochement correspondant, référencé 74 et 75, qui est aménagé sur chacun des deux côtés de l'armature interne 72 lui faisant face. Chacun de ces décrochements 74 et 75 a une forme conjuguée avec les décrochements 39 et 40, de manière à soutenir les efforts qui s'exercent dans le sens axial, ce qui permet de soulager d'autant les boulons 80 de liaison entre l'armature interne 72 et les deux extrémités 25 et 26 du manchon 5.

Chacune des butées lamifiées sphériques 4 est solidarisée avec le corps de moyeu central 1 par l'intermédiaire de son armature externe 73. Comme on peut le voir sur la Figure 3, chacune des butées lamifiées sphériques 4 possède un logement 77, qui a une forme conjuguée avec la bordure rigide externe 15 de l'ouverture 14 correspondante du corps de moyeu central 1. De cette manière, la butée lamifiée sphérique 4 peut s'engager par l'intermédiaire de son armature externe 73 dans le plateau 11 du corps de moyeu central 1. La solidarisation du plateau 11 du corps de moyeu avec la butée lamifiée sphérique 4 est obtenue par des boulons 81, qui bloquent la butée lamifiée sphérique 4 sur le plateau 11, lorsque le logement 77 de l'armature externe 73 est venu en butée contre la bordure rigide externe 15 du plateau 11. Pour cela, des séries d'alésages 78 et 79 sont aménagées dans chacun des côtés du logement 77 de l'armature externe 73, et ces séries d'alésages se font face l'un par rapport à l'autre de manière à être alignées. D'autre part, un alésage 19 correspondant est aménagé entre la bordure rigide externe 15 de l'ouverture 14 et le pourtour 13 externe du corps de moyeu central 1. Tous ces alésages sont agencés de manière que chaque série de deux alésages 78 et 79 et d'un alésage 19 soient alignés, suivant un axe qui est sensiblement parallèle à l'axe du rotor.

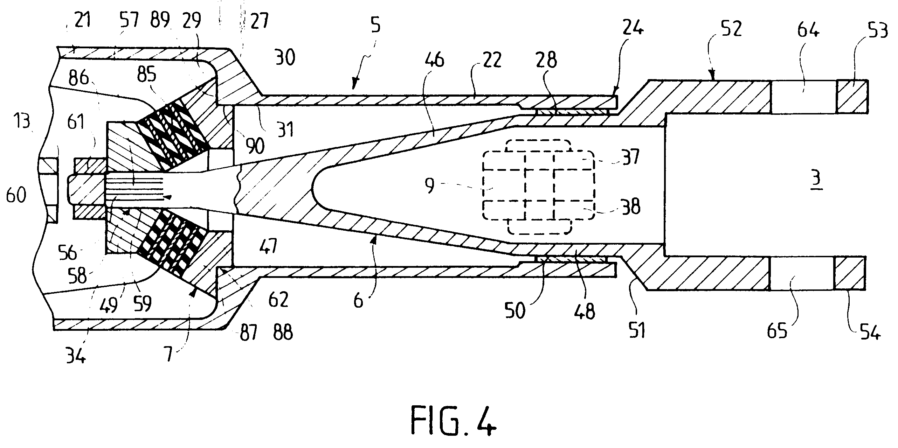

Le manchon 5 suivant l'invention est raccordé à la pale correspondante 3 par la fusée 6 d'attache et d'articulation de pas. En se reportant à la Figure 4, cette fusée 6 comporte :
- un corps creux 46 dont l'extrémité interne 47, côté centre du corps de moyeu 1, est reliée au levier de pas 8, et dont l'extrémité externe 48 se prolonge par :
- une embase 51 qui est munie de moyens de liaison rigide au pied de la pale 3 correspondante constitués par une double chape 52.

Comme on le voit sur la Figure 4, le corps creux 46 est de forme sensiblement tronconique circulaire, dont la petite base correspond à l'extrémité interne 47, et dont la grande base est constituée par une partie cylindrique circulaire 50. Cette partie cylindrique circulaire 50 est destinée à être montée dans la portée cylindrique circulaire 28 du manchon creux 5 avec un jeu suffisant pour permettre la libre rotation de cette fusée 6 dans le manchon 5. L'extrémité externe 48 du corps creux 46 comporte l'embase 51, qui possède à sa partie inférieure et à sa partie supérieure, respectivement une oreille 53 et une oreille 54, qui se font face, de manière à constituer la double chape 52. La liaison rigide avec le pied de pale 3 est assurée par deux axes qui sont montés l'un et l'autre dans une série d' alésages 64 et 65 aménagés dans chacune des oreilles 53 et 54, et dans un alésage aménagé dans le pied de pale 3. Ces trois alésages sont disposés de manière à ce l'axe qu'il constitue, soit sensiblement parallèle à l'axe du rotor.

L'extrémité interne de la fusée 6 d'attache et d'articulation de pas est constituée par l'extrémité interne 47 du corps creux 46, et elle est réalisée sous la forme d'une tige cylindrique circulaire 56. Cette tige cylindrique circulaire 56 comporte, à sa périphérie, des cannelures 57 destinées à recevoir la butée 7. De plus, cette tige 56 se prolonge par une extrémité filetée 60.

La butée, selon le mode de réalisation représenté sur les Figures, est une butée lamifiée de type conique qui constitue simultanément le palier intérieur d'articulation et l'organe de retenue à l'encontre de la force centrifuge de la fusée 6 dans le manchon 5. Cette butée lamifiée conique 7 possède une armature interne 86 et une armature externe 87. L'armature externe 87 vient se monter dans le décrochement 29 du manchon 5 dans la zone de jonction 27. Pour ce faire, l'armature externe 87 est munie d'un décrochement 88 constitué par une face circulaire externe 90 et par une face d'appui transversale 89. D'autre part, le décrochement 29 du manchon 5 est constitué par une partie transversale 30 et par une partie circulaire interne 31. La butée lamifiée conique 7 est ainsi montée dans le manchon 5 par l'intermédiaire de sa face circulaire 90 qui vient s'engager et se centrer dans la partie circulaire interne 31, jusqu'à ce que l'armature externe 87 vienne s'appliquer contre la portée transversale 30 du manchon 5 par l'intermédiaire de sa face d'appui transversale 89. D'autre part, l'armature interne 86 de la butée lamifiée conique 7 est constituée par une coupelle 49, dans laquelle est aménagé un trou central 58 muni de cannelures 59. L'extrémité interne 47 de la fusée d'attache et d'articulation de pas 6 vient se monter dans la coupelle 49 par l'intermédiaire de sa tige 56, dont les cannelures 57 coopèrent avec les cannelures 59 du trou 58, jusqu'à ce que l'extrémité 47 vienne buter contre la coupelle 49 par l'intermédiaire de l'épaulement 62 situé à l'extrémité des cannelures 57. Les moyens de blocage de cette coupelle 59 sur la tige 56 sont constitués par un écrou 61 qui vient se visser sur l'extrémité 60 de la tige 56, et qui vient appliquer ainsi la coupelle 49 sur l'épaulement 62 réalisé à l'extérieur des cannelures 57. Ainsi, le palier interne de la fusée 6 d'attache et d'articulation de la pale 3 dans le manchon 5 est constitué par la butée lamifiée conique 7, qui est disposée entre l'extrémité interne 47 de cette fusée 6 d'attache et d'articulation de pas et le manchon 5.

Cette butée lamifiée conique 7 est ainsi constituée de deux armatures, l'armature interne 86 et l'armature externe 87 qui sont rigides et entre lesquelles sont disposées des couches alternées coniques et concentriques de matériau élastique et de matériau rigide, afin de constituer la partie centrale 85.

Le levier de pas 8 est monté sur la coupelle 49 de support de la butée lamifiée conique 7, avec laquelle il est solidarisé de manière à former une seule et même pièce monobloc. De ce fait, la butée lamifiée conique 7 a son armature interne 86 qui est constituée par la coupelle-support 49 appartenant au levier de pas 8, et elle a son armature externe 87 qui est montée et solidarisée à l'intérieur du manchon 5 dans la partie externe 22 de ce dernier, qui est située du côté de l'axe du rotor. Le centre du cône de la partie centrale 85 de cette butée lamifiée conique 7 est situé du côté du centre du rotor. De plus, du fait de ce montage, l'axe de la fusée 6 d'attache et d'articulation de pas a le même axe que celui du manchon 5.

La tête de rotor articulé pour giravion selon l'invention possède également un dispositif de butée basse qui comporte un patin 101 monté sous chacun des manchons creux 5. Chacun de ces patins 101 vient en appui, pour un angle de battement négatif donné, sur la périphérie d'un anneau réciproque 102 rigide. Cet anneau réciproque 102 est maintenu en place, parallèlement au plan du rotor, au moyen d'étriers 103 qui sont fixés au corps de moyeu central 1. Ces étriers 103 sont disposés de manière à laisser à l'anneau réciproque 102 une possibilité de débattement limité dans son propre plan. Chaque patin 101 est fixé sous le manchon 5 correspondant au moyen des boulons 80 de fixation de l'armature interne 72 de la butée lamifiée sphérique 4 avec le manchon creux 5.

## Revendications

1. Tête de rotor articulé pour giravion comportant un corps de moyeu central (1) rigide, solidarisé perpendiculairement à un arbre d'entraînement (2), corps de moyeu (1) sur lequel chacune des pales (3) est fixée radialement par l'intermédiaire d'organes de liaison et d'articulation, comportant chacun:
- une butée élastomérique lamifiée sphérique (4) constituée d'une armature rigide interne (72) et d'une armature rigide externe (73) entre lesquelles sont disposées des couches alternées sphériques et concentriques de matériau élastique et de matériau rigide (71), ladite butée (4) étant logée dans une ouverture (14) pratiquée dans la partie rigide du corps de moyeu central et venant s'appuyer par son armature externe (73) sur la bordure rigidifiée (15) de cette ouverture (14);
- un manchon (5) creux ayant des faces latérales, dont l'extrémité, côté centre du corps de moyeu, entoure la butée élastomérique lamifiée sphérique (4) et dont ladite extrémité est solidarisée avec l'armature rigide interne (72) de ladite butée lamifiée sphérique (4), ledit manchon (5) étant de plus muni à son extrémité, du côté opposé au centre du corps de moyeu (1), et sur l'une de ses faces latérales (35), de moyens d'attache d'une contrefiche (9) de rappel élastique et d'amortissement de la pale (3) en traînée, laquelle contrefiche est attachée, à son autre extrémité, à la partie externe du corps du moyeu (1) rigide, ladite tête de rotor articulé étant caractérisée en ce que, l'autre extrémité de la contrefiche pouvant également être fixée au manchon (5) d'attache d'une pale (3) voisine, ladite tête comprend:
- une fusée (6) d'attache et d'articulation de pas de la paie (3) dont la partie externe est munie de moyens de liaison rigide au pied de pale (3) et de moyens de liaison (28, 50) au manchon (5) ayant un jeu suffisant pour permettre une libre rotation de la fusée (6) dans le manchon (5), la partie interne de la fusée (6) tourillonnant autour de l'axe de pas à l'intérieur de la partie externe du manchon (5) sur deux paliers, dont l'un au moins constitue une butée (7) pour transmettre, de la fusée (6) dans le manchon (5), les efforts axiaux provenant de la force centrifuge sur la pale (3).
- un levier de pas (8) solidarisé avec la fusée (6).

2. Tête de rotor articulé selon la revendication 1, caractérisée en ce que la butée (7) est le palier qui est situé le plus près du centre du corps de moyeu (1).

3. Tête de rotor articulé selon la revendication 1, caractérisée en ce que la butée (7) est le palier qui est situé le plus loin du centre du corps de moyeu (1).

4. Tête de rotor articulé selon l'une des revendications 1 à 3, caractérisée en ce que le levier de pas (8) est installé à l'extrémité interne de la fusée (6) d'attache et d'articulation de pas de la pale (3).

5. Tête de rotor articulé selon l'une quelconque des revendications 1 à 3, caractérisée en ce que le levier de pas (8) est installé à l'extrémité externe de la fusée (6) d'attache et d'articulation de pas de la pale (3).

6. Tête de rotor sustentateur articulé selon l'une quelconque des revendications précédentes, caractérisée en ce qu'elle comporte un dispositif de butée basse, qui est disposé sous le manchon (5) du côté du corps de moyeu (1), et qui permet l'appui du manchon (5) à l'arrêt ou lorsque le rotor tourne à faible vitesse.

7. Tête de rotor articulé selon l'une quelconque des revendications précédentes, caractérisée en ce que les moyens d'attache de chaque contrefiche (9) de rappel élastique et d'amortissement avec le manchon (5) sont constitués par une chape (36), dans laquelle vient se monter l'extrémité articulée (95) correspondante de ladite contrefiche (9).

8. Tête de rotor articulé selon l'une quelconque des revendications précédentes, caractérisée en ce que les moyens d'attache de chaque contrefiche (9) de rappel élastique et d'amortissement avec le corps de moyeu (1), ou encore avec le manchon (5) d'attache d'une pale (3) voisine, sont constitués par une chape (16), dans laque!le vient se monter l'extrémité articulée (96) correspondante de ladite contrefiche (9).

9. Tête de rotor articulé selon l'une des revendications 7 et 8, caractérisée en ce que les axes d'articulation (97) et (98) des extrémités (95) et (96) de chaque contrefiche (9) de rappel élastique et d'amortissement sont perpendiculaires l'un par rapport à l'autre.

10. Tête de rotor articulé selon l'une quelconque des revendications précédentes, caractérisée en ce que la butée (7) est une butée lamifiée de type conique, qui constitue simultanément le palier intérieur d'articulation et l'organe de retenue, à l'encontre de la force centrifuge de la fusée (6) dans le manchon (5).

11. Tête de rotor articulé selon l'une quelconque des revendications précédentes, caractérisée en ce que l'extrémité (23) du manchon creux (5), située du côté du centre du corps de moyeu (1), est solidarisée avec l'armature interne (72) de la butée lamifiée sphérique (4) correspondante, au moyen d'au moins deux boulons (80) qui pénètrent chacun dans un alésage (32, 33) aménagé dans chacune des extrémités (25, 26) du manchon (5) et se faisant face l'un par rapport à l'autre, et chacun dans un alésage (76) correspondant aménagé dans l'armature interne (72), de manière que ces alésages (32, 33, 76) soient alignés suivant des axes sensiblement parallèles à l'axe du rotor.

12. Tête de rotor articulé selon la revendication 11, caractérisée en ce que chacune des deux extrémités (25) et (26) du manchon creux (5), située du côté du centre du corps de moyeu (1), est munie d'un décrochement (39, 40) sensiblement perpendiculaire à l'axe du manchon (5), qui coopère avec un décrochement (74, 75) d'une forme conjuguée aménagé sur chacun des deux côtés de l'armature interne (72) lui faisant face, de manière à soutenir les efforts s'exerçant dans le sens axial, et à soulager d'autant les boulons (80) de liaison.

13. Tête de rotor articulé selon l'une quelconque des revendications précédentes, caractérisée en ce que l'armature externe (73) de chacune des butées lamifiées sphériques (4) possède un logement (77) ayant une forme conjuguée avec la bordure rigide externe (15) de l'ouverture (14) correspondante du corps de moyeu (1).

14. Tête de rotor articulé selon la revendication 13, caractérisée en ce que l'armature externe (73) de chaque butée lamifiée sphérique (4) est solidarisée avec la bordure rigide externe (15) de l'ouverture correspondante (14) du corps de moyeu (1), au moyen d'au moins un boulon (81) qui pénètre dans un alésage (78, 79) aménagé dans chacun des côtés du logement (77) de l'armature externe (73) et se faisant face l'un par rapport à l'autre, et dans un alésage (19) correspondant aménagé entre la bordure rigide externe (15) de l'ouverture (14) et le pourtour (13) du corps de moyeu (1), de manière que ces alésages (78, 79, 19) soient alignés suivant un axe sensiblement parallèle à l'axe du rotor.

15. Tête de rotor articulé selon l'une des revendications 2 ou 10, caractérisée en ce que la fusée (6) d'attache et d'articulation de pas comporte :
- un corps creux (46) de forme sensiblement tronconique circulaire dont l'extrémité interne (47), côté centre du corps de moyeu (1), qui correspond à la petite base, porte une coupelle (49) de support de la butée lamifiée conique (7), et dont l'extrémité externe (48), qui correspond à la grande base, est constituée par une partie cylindrique circulaire (50) qui est montée dans une portée cylindrique circulaire (28) du manchon (5) avec un jeu suffisant pour permettre la libre rotation de la fusée (6) dans le manchon (5) ; l'extrémité externe (48) du corps creux (46) étant constituée par la partie cylindrique circulaire (50) qui se prolonge par :
- une embase (51) disposée à l'extérieur du manchon (5), cette embase (51) étant la partie externe de la fusée (6) qui est munie de moyens de liaison rigide au pied de pale (3).

16. Tête de rotor articulé selon la revendication 15, caractérisée en ce que la partie externe de la fusée (6) d'attache et d'articulation de pas comporte l'embase (51) qui se prolonge par une double chape (52), afin de constituer les moyens de liaison rigide par deux axes au pied de pale (3).

17. Tête de rotor articulé selon la revendication 16, caractérisée en ce que l'embase (51) possède, à sa partie inférieure et à sa partie supérieure, une oreille (53) et (54), les deux oreilles (53, 54) se faisant face, de manière à constituer la double chape (52), la liaison rigide avec le pied de pale (3) étant assurée par les deux axes montés l'un et l'autre dans un alésage (64) et (65) aménagés dans chacune des oreilles (53) et (54), et s'engageant dans un alésage aménagé dans le pied de pale (3), ces trois alésages étant disposés de manière que l'axe correspondant soit sensiblement parallèle à l'axe du rotor.

18. Tête de rotor articulé selon l'une quelconque des revendications 15 à 17, caractérisée en ce que l'extrémité interne de la fusée (6) d'attache et d'articulation de pas, qui est constituée par l'extrémité interne (47) du corps creux (46), est réalisée sous la forme d'une tige cylindrique circulaire (56) qui comporte à sa périphérie des cannelures (57) coopérant avec des cannelures (59) aménagées dans un trou central (58) appartenant à la coupelle (49) ; la tige (56), le trou central (58) et les deux séries de cannelures (57) et (59) ayant les dimensions voulues pour que la coupelle (49) soit solidaire en rotation de la tige (56), ladite coupelle (49) étant maintenue dans le sens axial sur la tige (56) par des moyens de blocage.

19. Tête de rotor articulé selon la revendication 18, caractérisée en ce que les moyens de blocage de la coupelle (49) sur la tige (56) sont constitués par un écrou (61) qui vient se visser sur une extrémité filetée (60) de la tige (56), et qui vient appliquer la coupelle (49) sur un épaulement (62) réalisé à l'extérieur des cannelures (57).

20. Tête de rotor articulé selon la revendication 4 et l'une quelconque des revendications 15 à 19, caractérisée en ce que le levier de pas (8) est monté sur la coupelle (49) de support de la butée lamifiée conique (7), avec laquelle il est solidarisé.

21. Tête de rotor articulé selon la revendication 20, caractérisée en ce que le levier de pas (8) et la coupelle (49) forment une seule et même pièce monobloc.

22. Tête de rotor articulé selon l'une quelconque des revendications 15 à 21, caractérisée en ce que la butée lamifiée conique (7) a son armature interne (86) qui est constituée par la coupelle-support (49), et son armature externe (87) qui est montée et solidarisée à l'intérieur du manchon (5) dans la partie externe (22) de ce dernier située du côté de l'axe du rotor, le centre du cône de ladite butée (7) étant situé du côté du centre du rotor.

23. Tête de rotor articulé selon l'une quelconque des revendications 15 à 19 et la revendication 22, caractérisée en ce que le manchon creux (5) comporte :
- une partie externe (22) constituée par un tube, dont l'extrémité externe (24) est munie, à l'intérieur, de la portée cylindrique circulaire (28) de la fusée (6) d'attache et d'articulation de pas,
- une partie interne (21) de forme sensiblement tubulaire, avec les deux extrémités (25) et (26) se faisant face l'une par rapport à l'autre et solidarisées avec l'armature interne (72) de la butée lamifiée sphérique (4),
- la partie interne (21) ayant une section transversale plus grande que la partie externe (22), de manière à pouvoir loger la butée lamifiée sphérique (4),
- l'armature externe (87) de la butée lamifiée conique (7) étant montée dans la zone de jonction (27) de la partie externe (22) avec la partie interne (21) du manchon (5).

24. Tête de rotor articulé selon la revendication 23, caractérisée en ce que la partie externe (22) du manchon (5) est reliée à la partie interne (21) du manchon (5) par un décrochement (29) ayant :
- une partie transversale (30) sur laquelle s'applique l'armature externe (87) de la butée lamifiée conique (7), et
- une partie circulaire interne (31) dans laquelle vient se centrer l'armature externe (87) de la butée lamifiée conique (7), de manière que l'axe de la fusée (6) d'attache et d'articulation de pas ait le même axe que celui du manchon (5).

25. Tête de rotor articulé selon l'une des revendications 19 et 24, ou 21 et 24, caractérisée en ce que la partie interne (21) du manchon (5) comporte deux ouvertures latérales (34) se faisant face, de façon à permettre au levier de pas (8) de traverser le manchon (5) et de se débattre normalement par rapport à lui, lors de la commande de variation de pas.

26. Tête de rotor articulé selon l'une quelconque des revendications 7 à 25, caractérisée en ce que le manchon creux (5) comporte, sur un des côtés latéraux (35), dans une zone voisine de son extrémité externe (24), deux oreilles (37) et (38) disposées face à face, de manière que ces deux oreilles (37, 38) constituent la chape (36) destinée à recevoir l'extrémité articulée (95) de la contrefiche (9).

27. Tête de rotor articulé selon la revendication 26, caractérisée en ce que les deux oreilles (37, 38) et le manchon (5) sont un seul ensemble monobloc.

28. Tête de rotor articulé selon l'une quelconque des revendications 26 et 27, caractérisée en ce que l'axe (97) de l'extrémité articulée (95) de la contrefiche (9) est sensiblement perpendiculaire au plan du rotor.

29. Tête de rotor articulé selon l'une quelconque des revendications 6 à 28, caractérisée en ce que le dispositif de butée basse comporte un patin (101) monté sous chacun des manchons creux (5), chacun des patins (101) venant en appui pour un angle de battement négatif donné sur la périphérie d'un anneau réciproque (102) rigide maintenu en place parallèlement au plan du rotor, au moyen d'étriers (103) fixés au corps de moyeu (1), ces étriers (103) étant disposés de manière à laisser à l'anneau réciproque (102) une possibilité de débattement limité dans son propre plan.

30. Tête de rotor articulé selon l'une quelconque des revendications 11 à 29, caractérisée en ce que le patin (101) est fixé sous le manchon (5) correspondant au moyen des boulons (80) de fixation de l'armature interne (72) de la butée lamifiée sphérique (4).

31. Tête de rotor articulé selon l'une quelconque des revendications précédentes, caractérisée en ce que le corps de moyeu central (1) comporte un plateau (11), perpendiculaire à l'axe du rotor, qui est raccordé à la partie supérieure de l'arbre d'entraînement (2) par une partie centrale tubulaire (12) avec laquelle il forme une seule pièce, le plateau (11) ayant un pourtour (13) sensiblement circulaire et possédant les ouvertures (14) dans lesquelles viennent se loger les butées lamifiées sphériques (4) des pales (3), chaque ouverture (14) ayant un bord extérieur (15) situé dans un plan parallèle à l'axe du rotor, et s'étendant dans la direction radiale du moyeu, depuis la partie centrale (12) du moyeu jusqu'à une courte distance du pourtour (13).

32. Tête de rotor articulé selon la revendication 31, caractérisée en ce que le plateau (11) comporte à sa périphérie, dans chacune des zones comprises entre deux butées lamifiées sphériques (4) voisines, deux oreilles (17) et (18) disposées face à face, de manière que ces deux oreilles (17, 18) constituent la chape (16) destinée à recevoir l'extrémité articulée (96) de la contrefiche (9) correspondante.

33. Tête de rotor articulé selon la revendication 32, caractérisée en ce que l'axe (98) de l'extrémité articulée (96) de la contrefiche (9) est sensiblement parallèle au plan du rotor.

## Claims

1. Articulated rotor head for gyroplanes comprising a central rigid hub body (1) perpendicularly integrated with a drive spindle (2), each blade (3) being radially fixed to the hub body (1) by means of connecting and articulating devices, each comprising:
- a spherical laminated elastomeric stop (4) comprising an inner rigid armature (72) and an outer rigid armature (73) between which alternate concentric and spherical layers of elastic and rigid materials (71) are arranged, said stop (4) being housed in an opening (14) made in the rigid part of the central hub body, its outer armature (73) bearing against the rigidified edge (15) of this opening (14);
- a hollow sleeve (5) having lateral faces whose end on the center side of the hub body surrounds the spherical laminated elastomeric stop (4) said end being locked to the internal rigid armature (72) of said spherical laminated stop (4), said sleeve (5), at its end on the side opposite the centre of the hub body (1), and on one of its side faces (35), also being provided with means for connecting an elastic return and drag damper brace (9) of the blade (3), the other end of said brace being connected to the outer side of the rigid hub body (1), said articulated rotor head being characterized in that the other end of the brace being also liable to be fixed to the connecting sleeve (5) of a neighbouring blade (3), said head comprises:
- a connecting and pitch articulation spindle (6) of the blade (3) whose outer part is provided with means for rigidly connecting the foot of the blade (3), and linking means (28, 50) with the sleeve (5) having enough clearance to allow a free rotation of the spindle (6) in the sleeve (5), the inner part of the spindle (6) swivelling on two bearings around the pitch axis inside the outer part of the sleeve (5), at least one of these bearings forming an thrust stop (7) that transmits from the spindle (6) in the sleeve (5) the axial loads originating from the centrifugal forces on the blade (3);
- a pitch lever (8) rigidly locked to the spindle (6).

2. Articulated rotor head according to claim 1, characterized in that the thrust stop (7) is the bearing located closest to the center of the hub body (1).

3. Articulated rotor head according to claim 1, characterized in that the thrust stop (7) is the bearing located the furthest from the center of the hub body (1).

4. Articulated rotor head according to one of claims 1 to 3, characterized in that the pitch lever (8) is provided at the inner end of the connecting and pitch articulation spindle (6) of the blade (3).

5. Articulated rotor head according to any one of claims 1 to 3, characterized in that the pitch control lever (8) is provided at the outer end of the connecting and pitch articulation spindle (6) of the blade (3).

6. Articulated lifting rotor head according to any one of the preceding claims, characterized in that it comprises a bottom thrust stop system, arranged under the sleeve (5) on the side of the hub body (1), and which supports the blade carrying sleeve (5) when the rotor is at a standstill or turning at low speed.

7. Articulated rotor head according to any one of the preceding claims, characterized in that the means for connecting each elastic return and damper brace (9) with the sleeve (5) comprise a yoke (36) in which the corresponding articulated end (95) of the said brace (9) is mounted.

8. Articulated rotor head according to any one of the preceding claims, characterized in that the means for connecting each elastic return and damping brace (9) with the hub body (1), or possibly with the connecting sleeve (5) of a neighbouring blade (3), comprise a yoke (16) in which the corresponding articulated end (96) of the said brace (9) is mounted.

9. Articulated rotor head according to one of claims 7 and 8, characterized in that the articulation axes (97,98) of the ends (95, 96) of each elastic return and damping brace (9) are perpendicular in relation to each other.

10. Articulated rotor head according to anyone of the preceding claims, characterized in that the thrust stop (7) is a conical laminated thrust stop, which simultaneously forms the inner articulation bearing and the retaining component for the centrifugal forces of the spindle (6) in the sleeve (5).

11. Articulated rotor head according to any one of the preceding claims, characterized in that the end (23) of the hollow sleeve (5), located on the side of the centre of the hub body (1), is rigidly locked to the inner armature (72) of the corresponding spherical laminated stop (4), by means of at least two bolts (80), facing each other, which each penetrate into a bore hole (32,33) made in each end (25, 26) of the sleeve (5), and each into a corresponding bore hole (76) made in the inner armature (72), in such a manner that these bore holes (32, 33,76) are aligned along axes that are substantially parallel to the rotor axis.

12. Articulated rotor head according to claim 11, characterized in that each of the two ends (25,26) of the hollow sleeve (5), located on the side of the centre of the hub body (1) is provided with a shoulder (39, 40) that is substantially perpendicular to the axis of the sleeve (5), and which cooperate with a shoulder (74,75)of conjugate shape made on each of the two sides of the inner armature (72) facing it, in such a way as to support the forces exerted in the axial direction and relieve the connecting bolts (80) to the same extent.

13. Articulated rotor head according to any one of the preceding claims, characterized in that the outer armature (73) of each spherical laminated stop (4) has a housing (77) that is conjugate in shape with the outer rigid edge (15) of the corresponding opening (14) of the hub body (1).

14. Articulated rotor head according to claim 13, characterized in that the outer armature (73) of each spherical laminated stop (4) is rigidly locked to the outer rigid edge (15) of the corresponding opening (14) of the hub body (1), by at least one bolt (81) which penetrates into a bore hole (78,79) made in each side of the housing (77) of the outer armature (73), and which face each other, and in a corresponding bore hole (19) made between the outer rigid edge (15) of the opening (14) and the periphery (13) of the hub body (1), in such a way that these bore holes (78,79,19) are aligned along an axis that is substantially parallel to the rotor axis.

15. Articulated rotor head according to one of claims 2 or 10 characterized in that the connecting and pitch articulation spindle (6) comprises:
- a substantially truncated-cone shaped circular hollow body (46) whose inner end (47), on the side of the center of the hub body (1), which corresponds to the small base, carries a supporting cup (49) for the conical laminated thrust stop (7), and whose outer end (48), which corresponds to the large base, is made up of a circular cylindrical part (50) mounted in a circular cylindrical bearing surface (28) of the sleeve (5) with sufficient clearance to allow free rotation of the spindle (6) in the sleeve (5); the outer end (48) of the hollow body (46) comprising the circular cylindrical part (50) which is extended by:
- a base (51) located outside the sleeve (5), this base (51) being the outer part of the spindle (6) which is provided with means for rigidly connecting the foot of the blade (3).

16. Articulated rotor head according to claim 15, characterized in that the outer part of the connecting and pitch articulation spindle (6) comprises the base (51) which is extended by a double yoke (52) which forms the means for rigidly connecting the foot of the blade (3) by two axes.

17. Articulated rotor head according to claim 16, characterized in that the lower and upper part of the base (51) are fitted with two lugs (53, 54), the two lugs (53, 54) facing each other, so as to form the double yoke (52), the rigid connection to the foot of the blade (3) being ensured by two axes each mounted in a bore hole (64, 65) made in each of the lugs (53,54), and engaging in a bore hole made in the foot of the blade (3), these three bore holes being arranged so that the corresponding axis is substantially parallel to the axis of the rotor.

18. Articulated rotor head according to anyone of claims 15 to 17, characterized in that the inner end of the connecting and pitch articulation spindle (6), which is formed by the inner end (47) of the hollow body (46), is made in the form of a circular cylindrical rod (56) with grooves (57) around its periphery which cooperate with the grooves (59) made in a central hole (58) belonging to the cup (49); the dimensions of the rod (56), central hole (58) and the two series of grooves (57,59) being such that the cup (49) is rigidly locked in rotation with the rod (56), said cup (49) being held in its axial position on the rod (56) by locking means.

19. Articulated rotor head according to claim 18, characterized in that the means for locking the cup (49) on the rod (56) consist of a nut (61) screwed on a threaded end (60) of the rod (56) and which presses the cup (49) against a shoulder (62) made on the outside of the grooves (57).

20. Articulated rotor head according to claim 4 and any one of claims 15 to 19, characterized in that the pitch lever (8) is mounted on the support cup (49) of the conical laminated thrust stop (7), to which it is rigidly locked.

21. Articulated rotor head according to claim 20, characterized in that the pitch lever (8) and the cup (49) form a single monostop part.

22. Articulated rotor head according to any one of claims 15 to 21, characterized in that the conical laminated thrust stop (7) has an inner armature (86) which consists of the support cup (49), and an outer armature (87) which is mounted and solidly locked inside the sleeve (5) in its outer part (22) located on the side of the axis of the rotor, the centre of the cone of said thrust stop (7) being located on the side of the centre of the rotor.

23. Articulated rotor head according to any one of claims 15 to 19 and claim 22, characterized in that the hollow sleeve (5) comprises:
- an outer part (22) made up of a tube whose outer end (24) is provided, on the inside, with the cylindrical circular bearing surface (28) for the connecting and pitch articulation spindle (6),
- an internal part (21) of substantially tubular form, whose two ends (25,26) face each other and are rigidly locked to the inner armature (72) of the spherical laminated stop (4),
- the inner part (21) whose cross-section is larger than that of the outer part (22), allowing the inner part to house the spherical laminated stop (4),
- the outer armature (87) of the conical laminated thrust stop (7) is mounted in the connecting area (27) where the outer part (22) connects with the inner part (21) of the sleeve (5).

24. Articulated rotor head according to claim 23, characterized in that the outer part (22) of the sleeve (5) is connected to the inner part (21) of the sleeve (5) by a shoulder (29) comprising:
- a transverse part (30) on which the outer armature (87) of the conical laminated thrust stop (7) bears, and
- a circular inner part (31) in which the outer armature (87) of the conical laminated thrust stop (7) is centred, so that the connecting and pitch articulation spindle (6) and the sleeve (5) are located on the same axis.

25. Articulated rotor head according to one of claims 19 and 24, or 21 and 24, characterized in that the inner part (21) of the sleeve (5) comprises two lateral openings (34) arranged face to face so that the pitch lever (8) can pass through the sleeve (5) and deploy normally in relation to it when pitch control variations are performed.

26. Articulated rotor head according to any one of claims 7 to 25, characterized in that the hollow sleeve (5) comprises, on one of the lateral sides (35), in the area close to its outer end (24), two lugs (37, 38) arranged face to face, these two lugs (37, 38) forming the yoke (36) being intended to receive the articulated end (95) of the brace (9).

27. Articulated rotor head according to claim 26, characterized in that the two lugs (37,38) and the sleeve (5) are a single monostop assembly.

28. Articulated rotor head according to any one of claims 26 and 27, characterized in that the axis (97) of the articulated end (95) of the brace (9) is substantially perpendicular to the plane of the rotor.

29. Articulated rotor head according to any one of claims 6 to 28, characterized in that the bottom thrust stop device comprises a flange (101) mounted under each hollow sleeve (5), each of these flanges (101), at a given negative beating angle, bearing against the periphery of a rigid reciprocal ring (102) held in place parallel to the plane of the rotor by clips (103) fixed to the hub body (1), these clips (103) being arranged in such a way as to give the reciprocal ring (102), the possibility of limited deployment in its own plane.

30. Articulated rotor head according to any one of claims 11 to 29, characterized in that the flange (101) is fixed under the corresponding sleeve (5) by the fixing bolts (80) of the inner armature (72) of the spherical laminated thrust stop (4).

31. Articulated rotor head according to any one of the preceding claims, characterized in that the central hub body (1) comprises a plate (11), perpendicular to the axis of the rotor, which is connected to the upper part of the drive spindle (2) by means of a central tubular part (12) with which it forms a single piece, the plate (11) having a substantially circular periphery (13) and also openings (14) in which the spherical laminated thrust stops (4) of the blades (3) are housed, each opening (14) having an outer edge (15) located on a plane parallel to the axis of the rotor, and extending in the radial direction of the hub, from the central part (12) of the hub to within a short distance of the periphery (13).

32. Articulated rotor head according to claim 31, characterized in that the plate (11) comprises at its periphery, in each of the areas between two neighbouring spherical laminated thrust stops (4), two lugs (17, 18) arranged facing each other, in such a way that these two lugs (17, 18) form the yoke (16) intended to receive the articulated end (96) of the corresponding brace (9).

33. Articulated rotor head according to claim 32, characterized in that the axis (98) of the articulated end (96) of the brace (9) is substantially parallel to the plane of the rotor.

## Patentansprüche

1. Gelenkrotorkopf eines Drehflügelflugzeugs, der einen starren zentralen Nabenkörper (1) aufweist, welcher senkrecht mit einer Antriebswelle (2) verbunden ist, einen Nabenkörper (1), an dem jedes der Rotorblätter (3) mittels Verbindungs- und Gelenkorganen radial angebracht ist, welche jeweils umfassen:
- ein sphärisches lamellares Elastomer-Axiallager (4), das von einem inneren starren Beschlag (72) und einem äußeren starren Beschlag (73) gebildet wird, zwischen denen runde und konzentrische alternierende Schichten aus einem elastischen Material und aus einem starren Material (71) angeordnet sind, wobei dieses Axiallager (4) in einer Öffnung (14) untergebracht ist, die in dem starren Teil des zentralen Nabenkörpers angelegt ist, und sich mit seinem äußeren Beschlag (73) auf dem versteiften Rand (15) dieser Öffnung abstützt;
- eine hohle Hülse (5) mit Seitenflächen, deren zur Mitte des Nabenkörpers hin gerichtetes Ende das sphärische lamellare Elastomer-Axiallager (4) umgibt und mit dem inneren starren Beschlag (72) dieses sphärischen lamellaren Axiallagers (4) verbunden ist, wobei diese Hülse (5) außerdem an ihrem Ende auf der der Mitte des Nabenkörpers (1) entgegengesetzten Seite und an einer ihrer Seitenflächen (35) mit Mitteln zur Befestigung einer Strebe (9) zur elastischen Rückstellung und Dämpfung des dem Luftwiderstand ausgesetzten Rotorblatts (3) versehen ist, wobei diese Strebe mit ihrem anderen Ende an dem äußeren Teil des starren Nabenkörpers (1) angebracht ist, wobei der Gelenkrotorkopf dadurch gekennzeichnet ist, daß der Kopf das Folgende umfaßt, wobei das andere Ende der Strebe auch an der Befestigungshülse (5) eines benachbarten Rotorblatts (3) befestigt sein kann:
- einen Achsschenkel (6) zur Befestigung und Anlenkung des Rotorblatts (3) zum Zwecke seiner Verstellung, dessen äußerer Teil mit Mitteln zur starren Verbindung mit dem Fuß des Rotorblatts (3) und mit Mitteln zur Verbindung (28, 50) mit der Hülse (5) versehen ist, die ein ausreichendes Spiel aufweisen, um eine freie Drehung des Achsschenkels (6) in der Hülse (5) zu gestatten, wobei der innere Teil des Achsschenkels (6) im Innern des äußeren Teils der Hülse (5) auf zwei Lagern um die Blattverstellungsachse schwenkt, von denen mindestens eines ein Axiallager (7) bildet, um die Axialkräfte, welche von der auf das Rotorblatt (3) einwirkenden Zentrifugalkraft herrühren, von dem Achsschenkel (6) in die Hülse (5) zu übertragen;
- einen Blattverstellungshebel (8), der fest mit dem Achsschenkel (6) verbunden ist.

2. Gelenkrotorkopf nach Anspruch 1, dadurch gekennzeichnet, daß das Axiallager (7) das Lager ist, das sich am nächsten an der Mitte des Nabenkörpers (1) befindet.

3. Gelenkrotorkopf nach Anspruch 1, dadurch gekennzeichnet, daß das Axiallager (7) das Lager ist, das sich am weitesten entfernt von der Mitte des Nabenkörpers (1) befindet.

4. Gelenkrotorkopf nach einem der Ansprüche 1 bis 3, dadurch gekennzeichnet, daß der Blattverstellungshebel (8) am inneren Ende des Achsschenkels (6) zur Befestigung und Anlenkung des Rotorblatts (3) zum Zwecke seiner Verstellung installiert ist.

5. Gelenkrotorkopf nach einem der Ansprüche 1 bis 3, dadurch gekennzeichnet, daß der Blattverstellungshebel (8) am äußeren Ende des Achsschenkels (6) zur Befestigung und Anlenkung des Rotorblatts (3) zum Zwecke seiner Verstellung installiert ist.

6. Gelenk-Tragrotorkopf nach einem der vorhergehenden Ansprüche, dadurch gekennzeichnet, daß er eine als unterer Anschlag wirkende Vorrichtung aufweist, die nabenkörperseitig unter der Hülse (5) angeordnet ist und die Abstützung der Hülse (5) bei Stillstand oder bei Drehung des Rotors mit einer geringen Geschwindigkeit gestattet.

7. Gelenkrotorkopf nach einem der vorhergehenden Ansprüche, dadurch gekennzeichnet, daß die Mittel zur Befestigung jeder Strebe (9) zur elastischen Rückstellung und Dämpfung an der Hülse (5) von einer Gabel (36) gebildet sind, in welcher das entsprechende gelenkig gelagerte Ende (95) der Strebe (9) montiert ist.

8. Gelenkrotorkopf nach einem der vorhergehenden Ansprüche, dadurch gekennzeichnet, daß die Mittel zur Befestigung jeder Strebe (9) zur elastischen Rückstellung und Dämpfung an dem Nabenkörper (1) oder auch an der Befestigungshülse (5) eines benachbarten Rotorblatts (3) von einer Gabel (16) gebildet sind, in welcher das entsprechende gelenkig gelagerte Ende (96) der Strebe (9) montiert ist.

9. Gelenkrotorkopf nach einem der Ansprüche 7 und 8, dadurch gekennzeichnet, daß die Gelenkachsen (97) und (98) der Enden (95) und (96) jeder Strebe (9) zur elastischen Rückstellung und Dämpfung in bezug zueinander senkrecht stehen.

10. Gelenkrotorkopf nach einem der vorhergehenden Ansprüche, dadurch gekennzeichnet, daß das Axiallager (7) ein lamellares Axiallager vom konischen Typ ist, das gleichzeitig das innere Gelenklager und das Organ zum Halten des Achsschenkels (6) gegen die Zentrifugalkraft in der Hülse (5) bildet.

11. Gelenkrotorkopf nach einem der vorhergehenden Ansprüche, dadurch gekennzeichnet, daß das Ende (23) der hohlen Hülse (5), welches zur Mitte des Nabenkörpers (1) hin gerichtet ist, fest mit dem inneren Beschlag (72) des entsprechenden sphärischen lamellaren Axiallagers (4) verbunden ist, und zwar mittels mindestens zweier Bolzen (80), die jeweils derart in eine Bohrung (32, 33), welche in jedem der sich einander gegenüberliegenden Enden (25, 26) der Hülse (5) vorgesehen ist, und jeweils derart in eine entsprechende Bohrung (76), die in dem inneren Beschlag (72) vorgesehen ist, eingreifen, daß diese Bohrungen (32, 33, 76) entlang Achsen ausgerichtet sind, welche im wesentlichen parallel zur Rotorachse sind.

12. Gelenkrotorkopf nach Anspruch 11, dadurch gekennzeichnet, daß jedes der zur Mitte des Nabenkörpers (1) hin gerichteten zwei Enden (25) und (26) der hohlen Hülse (5) mit einem Absatz (39, 40) versehen ist, der im wesentlichen senkrecht zur Achse der Hülse (5) ist und mit einem ihm gegenüberliegenden Absatz (74, 75) von zugeordneter Form zusammenwirkt, der auf jeder der zwei Seiten des inneren Beschlags (72) vorgesehen ist, um die in axialer Richtung herrschenden Kräfte aufzufangen und im gleichen Maße die Verbindungsbolzen (80) zu entlasten.

13. Gelenkrotorkopf nach einem der vorhergehenden Ansprüche, dadurch gekennzeichnet, daß der äußere Beschlag (73) jedes der sphärischen lamellaren Axiallager (4) eine Aussparung (77) besitzt, die eine dem äußeren starren Rand (15) der entsprechenden Öffnung (14) des Nabenkörpers (1) zugeordnete Form aufweist.

14. Gelenkrotorkopf nach Anspruch 13, dadurch gekennzeichnet, daß der äußere Beschlag (73) jedes sphärischen lamellaren Axiallagers (4) fest mit dem äußeren starren Rand (15) der entsprechenden Öffnung (14) des Nabenkörpers (1) verbunden ist, und zwar mittels mindestens eines Bolzens (81), der jeweils derart in eine Bohrung (78, 79), welche in jeder der sich einander gegenüberliegenden Seiten der Aussparung (77) des äußeren Beschlags (73) vorgesehen ist, und derart in eine entsprechende Bohrung (19), die zwischen dem äußeren starren Rand (15) der Öffnung (14) und dem Umfang (13) des Nabenkörpers (1) vorgesehen ist, eingreift, daß diese Bohrungen (78, 79, 19) entlang einer Achse ausgerichtet sind, welche im wesentlichen parallel zur Rotorachse ist.

15. Gelenkrotorkopf nach einem der Ansprüche 2 oder 10, dadurch gekennzeichnet, daß der Achsschenkel (6) zur Befestigung und Anlenkung zwecks Blattverstellung aufweist:
- einen hohlen Körper (46) von im wesentlichen kreiskegelstumpfartiger Form, dessen inneres Ende (47), das zur Mitte des Nabenkörpers (1) hin gerichtet ist und der kleinen Basis entspricht, einen Stützteller (49) für das konische lamellare Axiallager (7) trägt, und dessen äußeres Ende (48), das der großen Basis entspricht, von einem kreiszylinderförmigen Teil (50) gebildet ist, der in einer kreiszylinderförmigen Lagerfläche (28) der Hülse (5) mit einem ausreichenden Spiel montiert ist, um die freie Drehung des Achsschenkels (6) in der Hülse zu gestatten; wobei das äußere Ende (48) des hohlen Körpers (46) von dem kreiszylinderförmigen Teil (50) gebildet ist, das sich fortsetzt in:
- einem Ansatz (51), der außerhalb der Hülse (5) angeordnet ist, wobei dieser Ansatz (51) den äußeren Teil des Achsschenkels (6) darstellt, der mit Mitteln zur starren Verbindung mit dem Fuß des Rotorblatts (3) versehen ist.

16. Gelenkrotorkopf nach Anspruch 15, dadurch gekennzeichnet, daß der äußere Teil des Achsschenkels (6) zur Befestigung und Anlenkung zwecks Blattverstellung den Ansatz (51) umfaßt, der sich in einer Doppelgabel (52) fortsetzt, um die Mittel zur starren Verbindung mit dem Fuß des Rotorblatts (3) mittels zweier Achsen zu bilden.

17. Gelenkrotorkopf nach Anspruch 16, dadurch gekennzeichnet, daß der Ansatz (51) an seinem unteren Teil und an seinem oberen Teil ein Ohr (53) und (54) aufweist, wobei sich die beiden Ohren (53, 54) gegenüberliegen, so daß sie die Doppelgabel (52) bilden, wobei die starre Verbindung mit dem Fuß des Rotorblatts (3) durch die zwei Achsen gewährleistet wird, die jeweils in einer Bohrung (64) und (65) montiert sind, die in jedem der Ohren (53) und (54) vorgesehen sind, und in eine in dem Fuß des Rotorblatts (3) vorgesehene Bohrung eingreifen, wobei diese drei Bohrungen derart angeordnet sind, daß die entsprechende Achse im wesentlichen parallel zur Rotorachse ist.

18. Gelenkrotorkopf nach einem der Ansprüche 15 bis 17, dadurch gekennzeichnet, daß das innere Ende des Achsschenkels (6) zur Befestigung und Anlenkung zwecks Blattverstellung, das von dem inneren Ende (47) des hohlen Körpers (46) gebildet wird, in Form einer kreiszylindrischen Stange (56) verwirklicht ist, die an ihrem Umfang Rillen (57) aufweist, welche mit Rillen (59) zusammenwirken, die in einem dem Teller (49) zugehörigen Mittelloch (58) vorgesehen sind; wobei die Stange (56), das Mittelloch (58) und die zwei Reihen von Rillen (57) und (59) die gewünschten Abmessungen aufweisen, damit der Teller (49) mit der Stange (56) drehfest verbunden ist, wobei der Teller (49) durch Arretierungsmittel in axialer Richtung auf der Stange (56) festgehalten wird.

19. Gelenkrotorkopf nach Anspruch 18, dadurch gekennzeichnet, daß die Mittel zur Arretierung des Tellers (49) auf der Stange (56) von einer Mutter (61) gebildet sind, die auf ein mit Gewinde versehenes Ende (60) der Stange (56) aufgeschraubt ist und die den Teller (49) gegen eine Schulter (62) drückt, welche außerhalb der Rillen (57) verwirklicht ist.

20. Gelenkrotorkopf nach Anspruch 4 und einem der Ansprüche 15 bis 19, dadurch gekennzeichnet, daß der Blattverstellungshebel (8) an dem Stützteller (49) für das konische lamellare Axiallager (7) montiert ist, mit dem er fest verbunden ist.

21. Gelenkrotorkopf nach Anspruch 20, dadurch gekennzeichnet, daß der Blattverstellungshebel (8) und der Teller (49) ein einziges und selbes einstückiges Teil bilden.

22. Gelenkrotorkopf nach einem der Ansprüche 15 bis 21, dadurch gekennzeichnet, daß das konische lamellare Axiallager (7) einen inneren Beschlag (86), der von dem Stützteller (49) gebildet wird, und einen äußeren Beschlag (87) aufweist, der im Innern der Hülse (5) in dem äußeren Teil (22) dieser letzteren rotorachsenseitig montiert und fest mit der Hülse verbunden ist, wobei die Spitze des Kegels dieses Axiallagers (7) zur Mitte des Rotors hin angeordnet ist.

23. Gelenkrotorkopf nach einem der Ansprüche 15 bis 19 und Anspruch 22, dadurch gekennzeichnet, daß die hohle Hülse (5) aufweist:
- einen äußeren Teil (22), der von einer Röhre gebildet ist, deren äußeres Ende (24) im Innern mit der kreiszylinderförmigen Lagerfläche (28) des Achsschenkels (6) zur Befestigung und Anlenkung zwecks Blattverstellung versehen ist,
- einen im wesentlichen röhrenförmigen inneren Teil (21) mit den zwei sich gegenüberliegenden Enden (25) und (26), die fest mit dem inneren Beschlag (72) des sphärischen lamellaren Axiallagers (4) verbunden sind,
- wobei der innere Teil (21) einen größeren Querschnitt als der äußere Teil (22) aufweist, um das sphärische lamellare Axiallager (4) beherbergen zu können,
- wobei der äußere Beschlag (87) des konischen lamellaren Axiallagers (7) in der Verbindungszone (27) des äußeren Teils (22) mit dem inneren Teil (21) der Hülse (5) montiert ist.

24. Gelenkrotorkopf nach Anspruch 23, dadurch gekennzeichnet, daß der äußere Teil (22) der Hülse (5) mit dem inneren Teil (21) der Hülse (5) durch einen Absatz (29) verbunden ist, welcher aufweist:
- einen quergerichteten Teil (30), auf welchem sich der äußere Beschlag (87) des konischen lamellaren Axiallagers (7) abstützt, und
- einen kreisrunden inneren Teil (31), in welchem der äußere Beschlag (87) des konischen lamellaren Axiallagers (7) mittig ausgerichtet wird, so daß die Achse des Achsschenkels (6) zur Befestigung und Anlenkung zwecks Blattverstellung dieselbe Achse ist wie diejenige der Hülse (5).

25. Gelenkrotorkopf nach einem der Ansprüche 19 und 24 oder 21 und 24, dadurch gekennzeichnet, daß der innere Teil (21) der Hülse (5) zwei einander gegenüberliegende seitliche Öffnungen (34) aufweist, um dem Blattverstellungshebel (8) zu gestatten, die Hülse (5) zu durchqueren und bei der Steuerung der Blattverstellung senkrecht zu dieser zu schwenken.

26. Gelenkrotorkopf nach einem der Ansprüche 7 bis 25, dadurch gekennzeichnet, daß die hohle Hülse (5) auf einer der Seiten (35) in einer Zone nahe ihrem äußeren Ende (24) zwei Ohren (37) und (38) aufweist, die gegenüberliegend angeordnet sind, so daß diese zwei Ohren (37, 38) die Gabel (36) bilden, welche dazu bestimmt ist, das gelenkig gelagerte Ende (95) der Strebe (9) aufzunehmen.

27. Gelenkrotorkopf nach Anspruch 26, dadurch gekennzeichnet, daß die zwei Ohren (37, 38) und die Hülse (5) eine einzige einstückige Gesamtheit darstellen.

28. Gelenkrotorkopf nach einem der Ansprüche 26 und 27, dadurch gekennzeichnet, daß die Achse (97) des gelenkig gelagerten Endes (95) der Strebe (9) im wesentlichen senkrecht zur Rotorebene ist.

29. Gelenkrotorkopf nach einem der Ansprüche 6 bis 28, dadurch gekennzeichnet, daß die als unterer Anschlag wirkende Vorrichtung einen Schuh (101) aufweist, der unter jeder der hohlen Hülsen (5), montiert ist, wobei jeder der Schuhe (101) bei einem gegebenen negativen Schlagwinkel am äußeren Umfang eines starren Gegenringes (102) zur Anlage kommt, der mittels Bügeln (103), die am Nabenkörper (1) befestigt sind, parallel zur Rotorebene gehalten wird, wobei diese Bügel (103) derart angeordnet sind, daß sie dem Gegenring (102) die Möglichkeit zum begrenzten Ausschlag in seiner eigenen Ebene lassen.

30. Gelenkrotorkopf nach einem der Ansprüche 11 bis 29, dadurch gekennzeichnet, daß der Schuh (101) mittels der Befestigungsbolzen (80) des inneren Beschlags (72) des sphärischen lamellaren Axiallagers (4) unter der entsprechenden Hülse (5) befestigt ist.

31. Gelenkrotorkopf nach einem der vorhergehenden Ansprüche, dadurch gekennzeichnet, daß der zentrale Nabenkörper (1) eine zur Achse des Rotors senkrechte Platte (11) aufweist, die durch einen röhrenförmigen zentralen Teil (12), mit dem sie ein einziges Stück bildet, mit dem oberen Teil der Antriebswelle (2) verbunden ist, wobei die Platte (11) einen im wesentlichen kreisförmigen Umfang besitzt und die Öffnungen (14) aufweist, in welchen die sphärischen lamellaren Axiallager (4) der Rotorblätter (3) untergebracht sind, wobei jede Öffnung (14) einen Außenrand (15) aufweist, der in einer Ebene parallel zur Achse des Rotors liegt, und sich in der radialen Richtung der Nabe vom mittleren Teil (12) der Nabe bis zu einer kurzen Entfernung vom Umfang (13) erstreckt.

32. Gelenkrotorkopf nach Anspruch 31, dadurch gekennzeichnet, daß die Platte (11) an ihrem Umfang in jeder der Zonen zwischen zwei benachbarten sphärischen lamellaren Axiallagern (4) zwei Ohren (17) und (18) aufweist, die gegenüberliegend angeordnet sind, so daß diese zwei Ohren (17, 18) die Gabel (16) bilden, welche dazu bestimmt ist, das gelenkig gelagerte Ende (96) der entsprechenden Strebe (9) aufzunehmen.

33. Gelenkrotorkopf nach Anspruch 32, dadurch gekennzeichnet, daß die Achse (98) des gelenkig gelagerten Endes (96) der Strebe (9) im wesentlichen parallel zur Rotorebene ist.
